# EUROPÄISCHE PATENTANMELDUNG

(11) **EP 4 060 873 A1**
(43) Veröffentlichungstag der Anmeldung: **21.09.2022**
(21) Anmeldenummer: 21163755.8
(22) Anmeldetag: 19.03.2021
(51) Int. Cl.: H02K 1/27

(54) **PERMANENTMAGNET-SYNCHRONMOTOR**

(71) Anmelder: Siemens Aktiengesellschaft, 80333 München (DE)
(72) Erfinder: Rettinger, Frank, 97616 Bad Neustadt (DE)

(57) **Zusammenfassung**

Die Erfindung betrifft einen Rotor (10) einer rotatorischen permanenterregten Synchronmaschine (1) mit vergrabenen Permanentmagneten (11), die in im Wesentlichen axial verlaufenden Ausnehmungen (12) eines magnetisch leitfähigen Körpers, insbesondere eines axial geschichteten Blechpakets des Rotors (10) angeordnet sind, wobei jede Ausnehmung (12) eine Tasche (13) zur Aufnahme eines oder mehrerer Permanentmagneten (11)aufweist, wobei sich an den entgegengesetzten Enden der Taschen (13), in einer Längsachse (20) der Ausnehmung (12) Flusssperren (14) befinden, wobei an der einem Außendurchmesser des Rotors (10) zugewandten Seite der Ausnehmungen (12) im Bereich zwischen Tasche (13) und Flusssperre (14) Mittel zur Erhöhung einer Gegenfeldstabilität vorgesehen sind.

## Beschreibung

Die Erfindung betrifft einen Rotor einer permanenterregten Synchronmaschine und eine permanenterregte Synchronmaschine.

Permanenterregte Synchronmaschinen werden in der Regel derart ausgelegt, dass sie im Fehlerfall, z.B. einem Stoßkurzschluss im Wicklungssystem des Stators der permanenterregten Synchronmaschine ohne nennenswerte irreversible Entmagnetisierung der Permanentmagnete widerstehen. So ein Fehlerfall stellt hohe Anforderungen an die Auslegung der permanenterregten Synchronmaschine und die verwendeten Magnetmaterialien und deren Anordnung im Rotor.

Besonders gefährdet sind dabei exponierte Bereiche der Permanentmagnete, wie z.B. die Ecken der Permanentmagnete, da sie im Fehlerfall besonders hohen Gegenfeldern ausgesetzt ist. Dort wird es demnach als erstes zu irreversibler Entmagnetisierung der Permanentmagnete kommen.

Bei permanenterregten Synchronmaschinen mit vergrabenen Permanentmagneten werden die Permanentmagnete in im Rotor vorhandene Taschen axial eingeschoben. In der Regel werden die Permanentmagnete innerhalb der Tasche durch "Positionierungsstege" positioniert.

Diese Stege befinden sich bei bekannten Maschinenauslegungen auf der wellenseitigen Seite der Magnettasche, wie dies auch der US 9 531 226 B2 und US 2018/0248427 A1 zu entnehmen ist.

Die Stoßkurzschlussfestigkeit der Maschine kann in der Regel durch die Verwendung von Magnetgüten mit hohem HcJ und/oder durch den Einsatz von dickeren Magneten erreicht werden.

Dies erhöht durch höherwertige Magnetgüten und/oder höheren Materialeinsatz die Kosten des Motors.

Ausgehend davon liegt der Erfindung die Aufgabe zugrunde einen Rotor einer permanenterregten Synchronmaschine mit verbesserter Gegenfeldstabilität zu schaffen, um insbesondere bei industriellen Anwendungen einen zuverlässigen Betrieb, auch bei außergewöhnlichen Betriebszuständen gewährleisten zu können.

Die Lösung der gestellten Aufgabe gelingt durch einen Rotor mit vergrabenen Permanentmagneten, die in im Wesentlichen axial verlaufenden Ausnehmungen eines magnetisch leitfähigen Körpers, insbesondere eines axial geschichteten Blechpakets des Rotors angeordnet sind, wobei jede Ausnehmung eine Tasche zur Aufnahme eines oder mehrerer Permanentmagneten aufweist, wobei sich an den entgegengesetzten Enden der Taschen, in einer Längsachse der Ausnehmung Flusssperren befinden, wobei an der einem Außendurchmesser des Rotors zugewandten Seite der Ausnehmungen im Bereich zwischen Tasche und Flusssperre Mittel zur Erhöhung einer Gegenfeldstabilität vorgesehen sind

Die Lösung der gestellten Aufgabe gelingt auch durch eine permanenterregte Synchronmaschine mit einem Stator und einem davon durch einen Luftspalt beabstandeten Rotor mit vergrabenen Permanentmagneten, die in im Wesentlichen axial verlaufenden Ausnehmungen eines magnetisch leitfähigen Körpers, insbesondere eines axial geschichteten Blechpakets des Rotors angeordnet sind, wobei jede Ausnehmung eine Tasche zur Aufnahme eines oder mehrerer Permanentmagneten aufweist, wobei sich an den entgegengesetzten Enden der Taschen, in einer Längsachse der Ausnehmung Flusssperren befinden, wobei an der einem Außendurchmesser des Rotors zugewandten Seite der Ausnehmungen im Bereich zwischen Tasche und Flusssperre Mittel zur Erhöhung einer Gegenfeldstabilität vorgesehen sind, um insbesondere einem Stoßkurzschluss der permanenterregten Synchronmaschine einer zumindest abschnittsweisen irreversiblen Entmagnetisierung der Permanentmagnete in den Taschen entgegenzuwirken.

Die Mittel zur Gegenfeldstabilität auf der dem Außenumfang des Rotors zugewandten Seite der Ausnehmungen im Bereich zwischen Flusssperren und Taschen ist besonders wirksam. Dort wirkt sich das Entmagnetisierungsfeld, das gegebenenfalls durch einen Stoßkurzschlussstrom in einem Wicklungssystem eines Stators generiert wird, normalerweise besonders negativ aus. Dies kann durch diese Mittel, die insbesondere als Halteelemente oder Stege ausgeführt sind besonders reduziert werden.

Ein derartiges Gegenfeld kann sich beispielsweise durch einen Stoßkurzschlussstrom, andere Belastungszustände der permanenterregten Synchronmaschine, hohe Überlastmomente, Stromfehleinprägungen des Umrichters und diverse Kurzschlussfehler im Wicklungssystem ergeben.

Vorteilhafterweise sind diese Stege, Haltelemente, Funktionshalteteile Teil des Dynamoblechs des Rotors und sind mit ihm einstückig ausgeführt. Dies wird beispielsweise durch einen Stanzvorgang gewährleistet. Die Dimensionierung der Stege ist derart ausgeführt, dass sie z.B. durch einen Stoßkurzschlussstrom und das daraus resultierende Entmagnetisierungsfeld und der damit ggf. eintretenden Sättigung der Stege die schützende Funktion für den Permanentmagneten weiter ausüben können. Mit anderen Worten: die schützende Funktion für den Permanentmagneten oder die Permanentmagneten wird unabhängig davon, ob der Steg, bzw. das Halteelement in Sättigung geht, ausgeübt.

Dabei werden diese Halteelemente, insbesondere Stege und Funktionshaltestege derart gestaltet, dass sie eine Ausdehnung in Richtung Längsachse als auch eine Ausdehnung in Richtung einer Querachse aufweisen. In Richtung Längsachse wird sich die Ausdehnung maximal bis zur Hälfte der magnetischen Dicke des benachbarten Permanentmagneten erstrecken, um nicht einen magnetischen Kurzschluss zwischen den Magnetpolen des Permanentmagneten zu generieren. Mit anderen Worten: In Richtung Längsachse wird sich das Halteelement maximal bis zum Übergangsbereich zwischen Nordpol (N) und Südpol (S) erstrecken.

In Richtung der Querachse der Ausnehmung wird sich die Dimensionierung des Halteelements bzw. Steg oder Funktionshaltesteg unter anderem an der Sättigung des Materials der Dynamobleche orientieren.

In jedem Fall soll aber die schützende Funktion für den Permanentmagneten durch die Halteelemente, insbesondere Stege und Funktionshaltestege ausgeübt werden können.

Durch die Anordnung von Stegen und Funktionshaltestegen auf der luftspaltseitigen Seite der Tasche wird die Gegenfeldstabilität des Rotors signifikant erhöht. Die Stege und Funktionshaltestegen leiten die Gegenfelder sozusagen um die Ecken des Permanentmagneten und bewirken damit eine deutlich homogenere Belastung des Permanentmagneten im Fehlerfall. Die starken Feldüberhöhungen an den Ecken des Permanentmagneten werden erfindungsgemäß merklich reduziert. So kann damit beispielsweise der zulässige Fehlerstrom in dem Wicklungssystem des Stators erfindungsgemäß um ∼15% gegenüber bisherigen Gestaltungen der Ausnehmungen einer Tasche für die Permanentmagneten eines Rotors erhöht sein.

Zusätzlich kann durch die Stege auch die Positionierungsfunktion der Permanentmagnete in den Ausnehmungen übernommen werden.

In einer weiteren Ausführung sind die Stege bzw. Haltelemente an den Taschen nicht immer beidseitig ausgeführt, sondern können auch alternierend über die axiale Länge des Rotors betrachtet angeordnet sein. Die reicht auch für die Positionieraufgaben, da beispielsweise ein Permanentmagnet über die axiale Länge von zwanzig Blechen reicht, so dass die Haltelemente alternierend auch nur an jedem fünften Bleche bzw. Tasche vorhanden sein können. Entscheidend bei der Anzahl der Haltelemente ist dabei, ob die Gegenfeldstabilität durch die eingeschränkte Auswahl der Haltelemente weiter im geforderten Umfang gegeben ist.

Der Rotor der permanenterregten Synchronmaschine weist Pole auf, wobei jeder Pol nur eine Ausnehmung oder mehrere Ausnehmungen aufweist. Die Ausnehmungen können dabei z.B. in tangentialer Richtung angeordnet sein. Ebenso können sie in einer V-förmigen Anordnung oder Doppel-V-förmigen Anordnung oder einer U-Form oder einer W-Form oder einer Dachform ausgebildet sein.

Die Anordnung der Ausnehmungen bzw. der Permanentmagneten in den Polen des Rotors hängt vom Einsatzgrad der permanenterregten Synchronmaschine ab. Durch Flusskonzentration, wie dies z.B. bei V-förmigen Anordnung oder Doppel-V-förmigen Anordnung oder einer U-Form möglich ist lassen sich höhere Luftspaltdichten des Magnetfeldes erreichen.

Jeder Pol kann, sofern er mehrere Permanentmagnete aufweist auch Permanentmagnete unterschiedlicher Qualität und Materialeigenschaften aufweisen, um das Luftspaltfeld dementsprechend zu gestalten.

Eine Schrägung und/oder auch Staffelung des Rotors bzw. seiner Pole über die axiale Länge des Rotors betrachtet kann dabei weiterhin ausgeübt werden. Dies reduziert u.a. Rastmomente des permanenterregten Synchronmotors.

Als Anwendungen derartiger Rotoren in permanenterregten Synchronmaschinen sind vor allem in einem industriellen Umfeld wie bei Pumpen, Lüfter, Verdichter, Kompressoren, Rollgängen, Förderanlagen vorgesehen, die eine sehr lange kontinuierliche Betriebsdauer aufweisen. Ebenso ist deren Einsatz bei Traktionsantreiben wie Miningfahrzeugen, E-Bussen, Straßenbahnen oder Zügen vorstellbar.

Die Erfindung sowie weitere vorteilhafte Ausgestaltungen der Erfindung, wurden anhand schematisch dargestellter Ausführungsbeispiele näher erläutert; darin zeigen:
- FIG 1: einen prinzipiellen Längsschnitt eine dynamoelektrische Maschine,
- FIG 2: eine Detailansicht eines Querschnitts einer dynamoelektrischen Maschine,
- FIG 3: eine weitere Detailansicht eines Querschnitts einer dynamoelektrischen Maschine,
- FIG 4 bis 8: Detaildarstellungen verschiedener Ausnehmungen eines Rotors,
- FIG 9 bis 14: Anordnungen von Permanentmagneten eines Poles eines Rotors.

Es sei angemerkt, dass sich Begriffe wie "axial", "radial", "tangential" etc. auf die in der jeweiligen Figur bzw. im jeweils beschriebenen Beispiel zum Einsatz kommende Achse 9 beziehen. Mit anderen Worten beziehen sich die Richtungen axial, radial, tangential stets auf eine Drehachse eines Rotors 10 und damit auf die entsprechende Symmetrieachse eines Stators 2. Dabei beschreibt "axial" eine Richtung parallel zur Achse 9, "radial" beschreibt eine Richtung orthogonal zur Achse 9, auf diese zu oder auch von ihr weg, und "tangential" ist eine Richtung, die in konstantem radialem Abstand zur Achse 9 und bei konstanter Axialposition kreisförmig um die Achse herum gerichtet ist. Der Ausdruck "in Umfangsrichtung" ist mit "tangential" gleichzusetzen.

In Bezug auf eine Fläche, beispielsweise eine Querschnittsfläche, beschreiben die Begriffe "axial", "radial", "tangential" etc. die Orientierung des Normalenvektors der Fläche, d.h. desjenigen Vektors, der senkrecht auf der betroffenen Fläche steht.

Der Begriff "benachbart" soll im Zusammenhang mit Bauteilen, bspw. mit Spulen oder Statorzähnen, ausdrücken, dass sich im Falle von "benachbarten Bauteilen" zwischen diesen beiden Bauteilen insbesondere kein weiteres derartiges Bauteil befindet, sondern höchstens ein leerer Zwischenraum oder gegebenenfalls ein andersartiges Bauteil.

Unter dem Ausdruck "koaxiale Bauteile", bspw. koaxiale Komponenten wie Rotor 10 und Stator 2, werden hier Bauteile verstanden, die gleiche Normalenvektoren aufweisen, für die also die von den koaxialen Bauteilen definierten Ebenen parallel zueinander sind. Des Weiteren soll der Ausdruck beinhalten, dass die Mittelpunkte koaxialer Bauteile auf der gleichen Rotations- bzw. Symmetrieachse liegen. Diese Mittelpunkte können jedoch auf dieser Achse ggf. an verschiedenen axialen Positionen liegen und die genannten Ebenen also einen Abstand >0 voneinander haben. Der Ausdruck verlangt nicht zwangsläufig, dass koaxiale Bauteile den gleichen Radius haben.

Der Begriff "komplementär" meint im Zusammenhang mit zwei Komponenten, welche "komplementär" zueinander sind, dass ihre äußeren Formen derart ausgestaltet sind, dass die eine Komponente vorzugsweise vollständig in der zu ihr komplementären Komponente angeordnet werden kann, so dass sich die innere Oberfläche der einen Komponente, beispielsweise eine Längsseite einer Tasche 13 und die äußere Oberfläche der anderen Komponente, beispielsweise ein Permanentmagnet 11 idealerweise lückenlos bzw. vollflächig berühren. Konsequenterweise ist also im Falle von zwei zueinander komplementären Gegenständen die äußere Form des einen Gegenstandes durch die äußere Form des anderen Gegenstandes festgelegt. Der Begriff "komplementär" könnte durch den Begriff "invers" ersetzt werden. Dabei ist aber nicht grundsätzlich ausgeschlossen, dass zwischen zwei komplementären Formen ein Raum vorhanden ist, der durch Luft oder Kleber oder Vergussmasse zumindest teilweise eingenommen wird.

Der Übersichtlichkeit wegen werden in den Figuren teilweise in den Fällen, in denen Bauteile mehrfach vorhanden sind, häufig nicht sämtliche dargestellten Bauteile mit Bezugszeichen versehen.

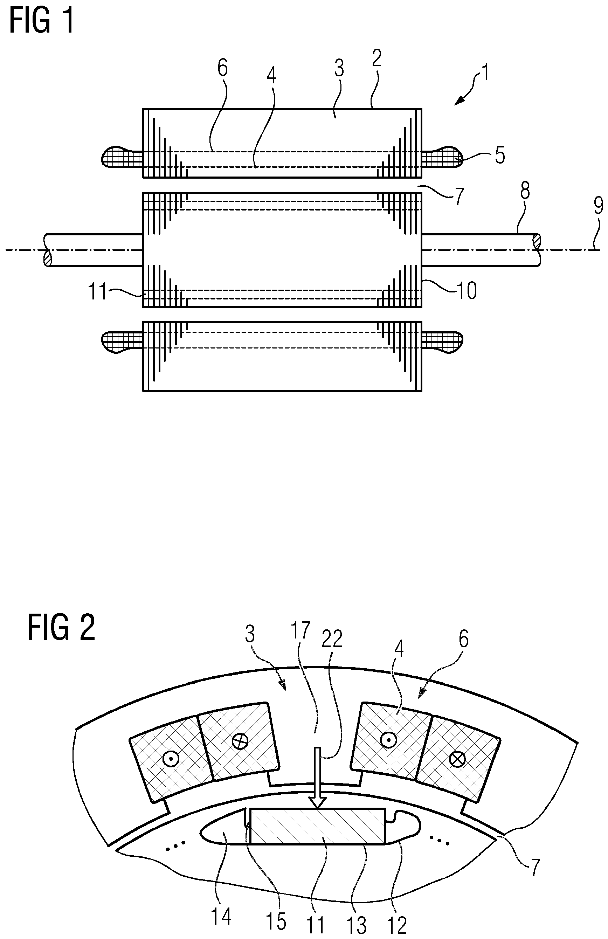

FIG 1 zeigt in einem prinzipiellen Längsschnitt eine dynamoelektrische Maschine 1, insbesondere eine permanenterregte Synchronmaschine, mit einem Stator 2 und einem Rotor 10, der drehfest mit einer Welle 8 verbunden ist. Der Stator 2 weist in nicht näher dargestellten Nuten eines Blechpakets 3 ein Wicklungssystem 4 auf, dass an den Stirnseiten des Blechpakets 3 Wickelköpfe 5 ausbildet.

Der Rotor 10 weist in dieser Ausführungsform vergrabene Permanentmagnete 11 auf, die in im Wesentlichen axial verlaufenden Taschen eines Blechpakets des Rotors 10 angeordnet sind. Als vergrabene Permanentmagnete 11 werden dabei Permanentmagnete 11 betrachtet, die nicht an der Außenoberfläche des Rotors 10 angeordnet sind.

Durch elektromagnetische Wechselwirkung des Rotors 10 mit einem durch das Wicklungssystem 4 bestromt Stator 2 wird der Rotor um eine Achse 9 in Drehung versetzt. Der Rotor 10 ist dabei vom Stator 2 durch einen Luftspalt 7 getrennt.

FIG 2 zeigt eine Detailansicht eines Querschnitts der dynamoelektrischen Maschine 1, wobei das Wicklungssystem 4 des Stators 2 dort als Zahnspule ausgeführt ist. Bei diesem Wicklungssystem 4 sind pro Nut 6 zwei unterschiedliche Seiten benachbarter Zahnspulen vorgesehen. Die Erfindung lässt sich auch bei anderen Wicklungssystemen des Stators 2, z.B. Zahnspulenwicklungen, verteilten Wicklungen, wie Einschicht-Ganzlochwicklungen, Zweischicht-Ganzlochwicklungen (gesehnt) und allgemein bei Zweischicht-Bruchlochwicklungen einsetzen. Ebenso sind die dabei eingesetzten Drahtformen (Rund- und Flachdrahtwicklungen ebenso wie Litzenleitern) nahezu beliebig.

Durch den Luftspalt 7 vom Stator 2 getrennt, ist der Rotor 10 mit seinen Permanentmagneten 11 angeordnet. Diese Permanentmagnete 11 sind in dieser Ausführungsform mehr oder weniger tangential innerhalb des Rotors 10 angeordnet. Der Permanentmagnete 11 ist quaderförmigen ausgeführt und befindet sich in einer Tasche 13. Die Tasche 13 ist Teil einer Ausnehmung 12, wobei der Abschnitt, der nicht vom Permanentmagneten 11 innerhalb der Ausnehmungen 12 eingenommen wird, vorzugsweise als Flusssperren 14 ausgebildet sind.

Diese Flusssperren 14 weisen entweder Luft oder amagnetischen Material auf. Die Flusssperren 14 in den Polen bzw. um die Taschen 13 des Rotors 10 sind notwendig, um magnetische Kurzschlüsse der Permanentmagnete 11 im Bereich der jeweiligen Pole zu vermeiden.

Zwischen den Flusssperren 14 und den Taschen sind Stege 15 vorgesehen, die auf der zum Luftspalt 7 gewandten Seite der Ausnehmung 12 vorgesehen sind. Durch diese erfindungsgemäße Anordnung der Stege 15 kann eine Entmagnetisierung der Permanentmagnete 11, insbesondere in den Randbezirken der Permanentmagnete 11 beispielsweise durch einen Stoßkurzschluss im Wicklungssystem 4 überwiegend vermieden werden.

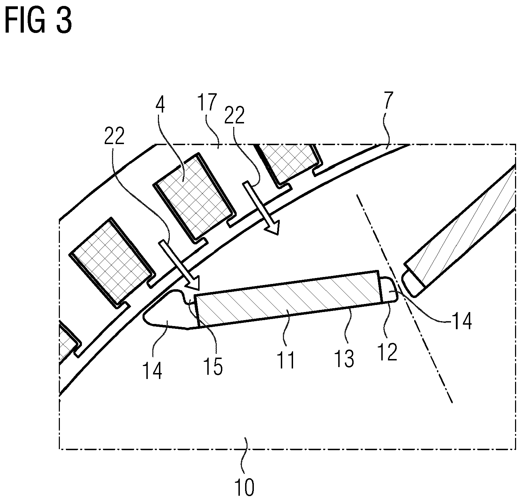

FIG 3 zeigt in einer weiteren Detailansicht eines Querschnitts einer dynamoelektrischen Maschine 1 einen Stator 2, ein Wicklungssystem 4, das in Nuten 6 des Blechpakets 3 Stators 2 angeordnet ist. Zähne 17 zwischen den Nuten 6 weisen zum Luftspalt 7 weisen und führen das durch das bestromte Wicklungssystem 4 hervorgerufene Magnetfeld.

Der Rotor 10 weist in dieser Ausführung V-förmig angeordnete Permanentmagnete 11 auf, die einen Pol des Rotors 10 bilden. Die V-förmige Anordnung der Permanentmagnete 11 hat den Vorteil, dass unter anderem die Magnetfelddichte im Luftspalt 7 erhöht wird. Man spricht auch von einer Flusskonzentration.

Auch hier sind auf der dem Luftspalt 7 zugewandten Seite der Ausnehmungen 12 zwischen den Flusssperren 14 und den Taschen 13 Stege 15 angeordnet, die einer Entmagnetisierung der Permanentmagnete 11 in einem Stoßkurzschluss des Wicklungssystems 4 entgegenwirken.

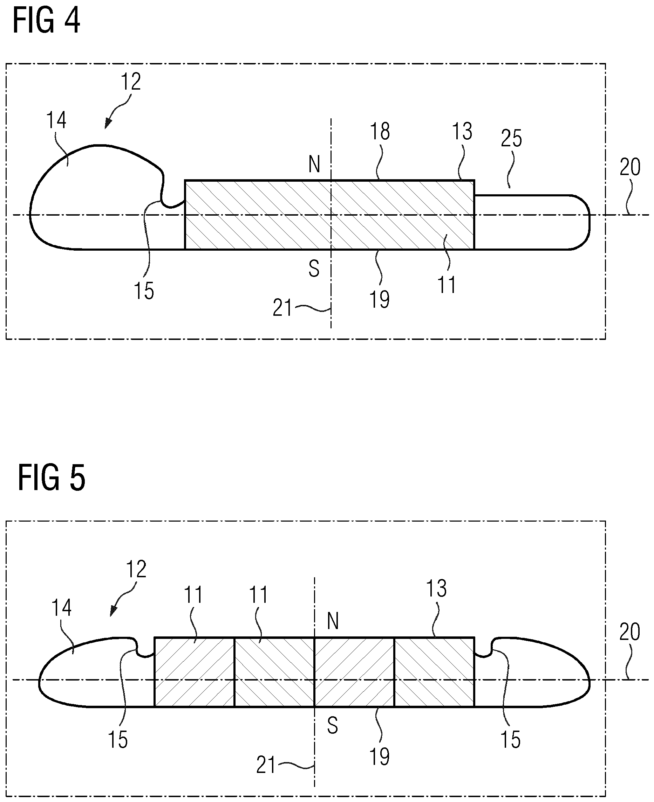

FIG 4 zeigt einer Detailansicht einer Ausnehmung 12. Die Ausnehmung 12 weist einen Bereich auf, bei dem die Permanentmagnete 11 angeordnet sind. Dies wird als Tasche 13 bezeichnet. Die Permanentmagnete 11 liegen dabei an den Längsseiten 18, 19 der Tasche 13 komplementär an. Mit anderen Worten, es ist ein durchgängiger Kontakt, ggf. mit einer Klebeschicht versehen von Blechen und Permanentmanget 11 vorhanden.

In der Regel ist die Tasche 13 etwas größer gestaltet als der Permanentmagnet 11, da Platz zum Fügen und/oder Toleranzen berücksichtig werden müssen. Dieser ggf. freie Raum wird dann mit Kleber oder Vergussmasse gefüllt, bzw. kann bei anderen Befestigungsarten, wie Verklemmen oder Verstemmen auch nur Luft sein.

Es gibt somit eine außenliegende Längsseite 18 und eine innenliegende Längsseite 19. Die außen liegende Längsseite 18 weist im Wesentlichen zum Luftspalt 7, die innenliegende Längsseite 19 zur Welle 8. Der Permanentmagnet 11 ist in die Tasche 13 derart eingesetzt, dass sein Nordpol und sein Südpol jeweils an den Längsseiten angeordnet sind. D.h., der Nordpol befindet sich an der außenliegenden Längsseite 18 und der Südpol demnach auf der innenliegende Längsseite 19. Je nachdem wie die Pole des Rotors 10 ausgeführt sind, weisen mehrere Taschen 13 eine dementsprechende Anordnung der Permanentmagnete 11 in den Taschen 13 auf.

Der Übergangsbereich zwischen Nordpol und Südpol des Permanentmagnets 11 erstreckt sich im Wesentlichen in der Längsachse der Ausnehmung 12. Senkrecht zur Längsachse 20 der Ausnehmung 12 liegt eine Querachse 21 der Ausnehmung 12 vor, die im Wesentlichen der Magnetisierungsrichtung des Permanentmagneten 11 entspricht.

In dem Bereich des Übergangs von der Tasche 13 zur Flusssperren 14 sind Stege 15 bzw. Halterungen an der zum Luftspalt 7 gewandten Seite der Ausnehmungen 12 vorhanden. Neben dem Vorteil, dass diese Stege 15 bzw. Halterungen etwaigen Entmagnetisierungserscheinungen 22 bei einem Stoßkurzschluss des Wicklungssystems 4 entgegenwirken, sind diese Stege 15 bzw. Halterungen auch zur Positionierung und Fixierung der Permanentmagnete 11 geeignet.

Nachdem in Axialrichtung betrachtet der Rotor 10 axial geschichtete Bleche aufweist, ist in einer weiteren Ausführung auch vorstellbar, dass derartige Stege 15 und Halterungen nur an jedem x-ten Blech oder wechselseitig vorhanden sind. Diese Ausgestaltung reicht eindeutig zur Positionierung der Permanentmagnete 11 und je nach dem zu erwartenden Stoßkurzschlussstrom auch gegenüber den Entmagnetisierungserscheinungen.

FIG 5 zeigt einen zur Querachse 21 symmetrische Ausnehmung 12, wobei in der Tasche 13 mehrere Permanentmagnete 11 angeordnet sind. Die Stege 15 bzw. Halteelemente sind der Außenseite des Rotors 10 bzw. dem Luftspalt 7 der permanenterregten Synchronmaschine zugewandt.

Die Permanentmagnetanordnung einer Tasche 13 kann demnach einen einstückig ausgeführten Permanentmagnet 11 oder mehrere Permanentmagnete 11 aufweisen

Die Permanentmagnete 11 liegen dabei an den Längsseiten 18, 19 der Tasche 13 komplementär an. Mit anderen Worten, es ist ein durchgängiger Kontakt, ggf. mit einer Klebeschicht versehen von Blechen und Permanentmagneten 11 vorhanden.

In der Regel ist die Tasche 13 etwas größer gestaltet als die Permanentmagneten 11, da Platz zum Fügen und/oder Toleranzen berücksichtig werden müssen. Dieser ggf. freie Raum wird dann mit Kleber oder Vergussmasse gefüllt, bzw. kann bei anderen Befestigungsarten, wie Verklemmen oder Verstemmen auch nur Luft sein.

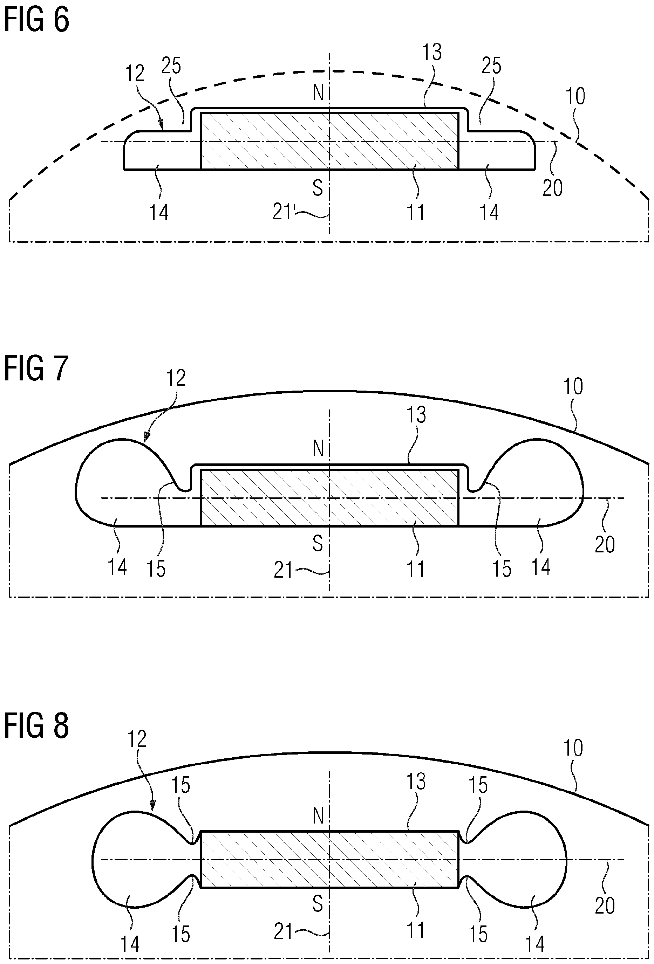

FIG 6 bis FIG 8 zeigen weitere Ausführungen der Halteelemente insbesondere der Stege 15 und der Funktionshaltestege 25 an einer tangentialen Anordnung eines Permanentmagneten 11 in einer dementsprechenden Ausnehmungen 12. Entgegen der FIG 4 sind dabei in FIG 6 und FIG 7 die Halteelemente und die Flusssperren 14 bzgl. der Querachse 21 achsensymmetrisch aufgebaut.

FIG 8 zeigt Halteelemente und Flusssperren 14 die bzgl. Der Querachse 21 und Längsachse 20 achsensymmetrisch aufgebaut sind.

Die Pole des Rotors 10 sind, in Umfangsrichtung betrachtet bzgl. ihrer Magnetisierungsrichtung alternierend angeordnet.

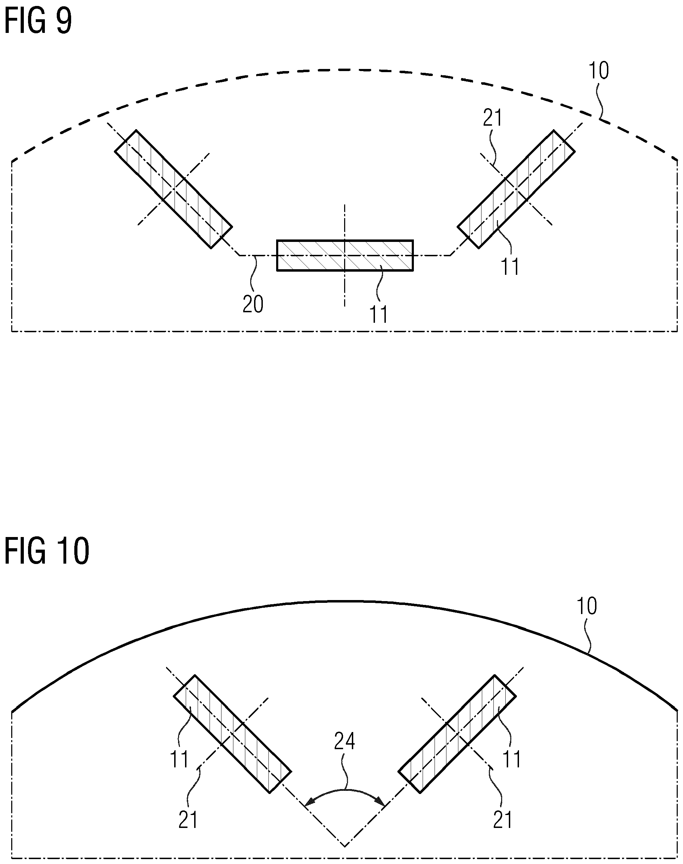

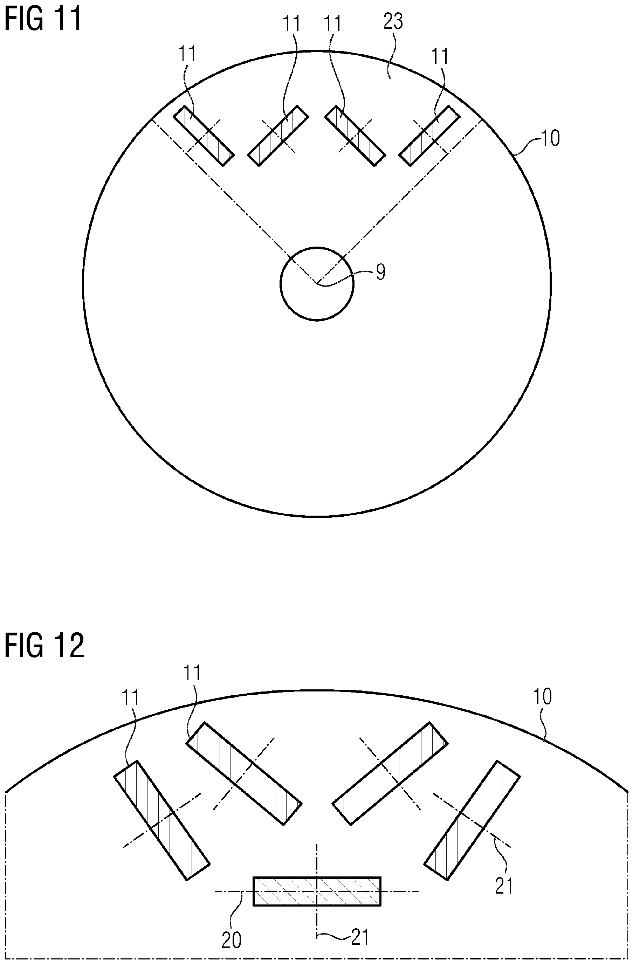

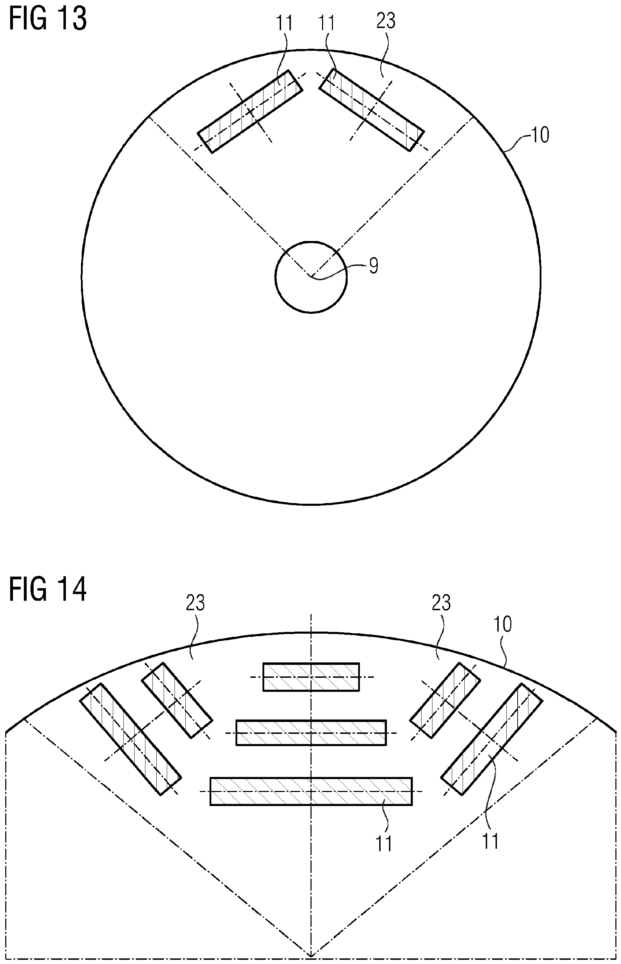

FIG 9 bis FIG 14 zeigen unterschiedliche Anordnungen von Ausnehmungen 12 zur Aufnahme von Permanentmagneten 11 zur Gestaltung eine Pols 23 des Rotors 10. Dabei spielen u.a. die zu erzielenden Luftspaltdichten eine Rolle. Aus Gründen der Übersichtlichkeit wurden dabei bei den Ausnehmungen 12 die Halteelemente, wie Stege 15 oder Funktionshaltestege 25 und die Flusssperren 14 weggelassen. Jedoch sind dabei die Ausgestaltungen der Flusssperren 14 und der Haltelemente beliebig aus den vorigen Ausführungsbespielen einsetzbar.

Es sind also sowohl die Qualität der einzelnen Permanentmagnete 11 je Pol 23, als auch die Gestaltung der Haltelemente und die Gestaltung der Flusssperren 14 nahezu beliebig zu kombinieren. Entscheidend ist, dass die Haltelemente an der dem Außendurchmesser des Rotors 10 zugewandten Seite der Ausnehmungen 12 im Bereich zwischen Tasche 13 und Flusssperre 14 die Mittel zur Erhöhung einer Gegenfeldstabilität vorgesehen sind.

Die der Erfindung zugrundeliegende Idee lässt sich ebenso auf permanenterregte Synchronmaschinen mit Außenläufer übertragen, wie sie z.B. bei direkt angetriebenen Generatoren von Windkraftanlagen eingesetzt werden.

Derartige Rotoren 10 werden vor allem in permanenterregten Synchronmaschinen eingesetzt, die im industriellen Umfeld betrieben werden. Dabei sind sie als Antriebe von Pumpen, Lüfter, Verdichter, Kompressoren, Rollgängen, Förderanlagen vorgesehen, die eine sehr lange kontinuierliche Betriebsdauer aufweisen. Derartige Synchronmaschinen sind auch bei Traktionsantrieben wie Miningfahrzeugen, E-Bussen, Straßenbahnen oder Zügen einsetzbar, um durch die Erhöhung der Gegenfeldstabilität einen zuverlässigeren Betrieb zu gewährleisten.

## Patentansprüche

1. Rotor (10) einer rotatorischen permanenterregten Synchronmaschine (1) mit vergrabenen Permanentmagneten (11), die in im Wesentlichen axial verlaufenden Ausnehmungen (12) eines magnetisch leitfähigen Körpers, insbesondere eines axial geschichteten Blechpakets des Rotors (10) angeordnet sind, wobei jede Ausnehmung (12) eine Tasche (13) zur Aufnahme eines oder mehrerer Permanentmagneten (11)aufweist, wobei sich an den entgegengesetzten Enden der Taschen (13), in einer Längsachse (20) der Ausnehmung (12) Flusssperren (14) befinden, wobei an der einem Außendurchmesser des Rotors (10) zugewandten Seite der Ausnehmungen (12) im Bereich zwischen Tasche (13) und Flusssperre (14) Mittel zur Erhöhung einer Gegenfeldstabilität vorgesehen sind.

2. Rotor (10) einer rotatorischen permanenterregten Synchronmaschine (1) nach Anspruch 1, **dadurch gekennzeichnet, dass** die Mittel zur Erhöhung einer Gegenfeldstabilität als Halteelemente an den Enden der Taschen (13) angeordnet sind und dabei zur Positionierung der Permanentmagneten (11) in den Taschen (13) beitragen.

3. Rotor (10) einer rotatorischen permanenterregten Synchronmaschine (1) nach, Anspruch 1 oder 2, **dadurch gekennzeichnet, dass** die Mittel zur Erhöhung einer Gegenfeldstabilität, insbesondere die Halteelemente in axialer Richtung des Rotors (10) alternierend an den Taschen (13) der Bleche des Rotors (10) angeordnet sind.

4. Rotor (10) einer rotatorischen permanenterregten Synchronmaschine (1) nach einem der vorhergehenden Ansprüche, **dadurch gekennzeichnet, dass** die Flusssperren (14) an den Enden der jeweiligen Taschen (13) im Wesentlichen in Verlängerung der Längsachse (20) der Ausnehmungen (12) und senkrecht zur Magnetisierungsrichtung der Permanentmagnete (11) angeordnet sind.

5. Rotor (10) einer rotatorischen permanenterregten Synchronmaschine (1) nach einem der vorhergehenden Ansprüche, **dadurch gekennzeichnet, dass** die Halteelemente als Stege (15) oder Funktionshaltestege (25) ausgeführt sind.

6. Rotor (10) einer rotatorischen permanenterregten Synchronmaschine (1) nach Anspruch 5, **dadurch gekennzeichnet, dass** die Stege (15) und Funktionshaltestege (25) derart ausgeführt sind, dass sie insbesondere in einem Fehlerfall, z.B. einem Stoßkurzschlussfall die schützende Funktion für den Permanentmagneten (11) weiter ausüben.

7. Rotor (10) einer rotatorischen permanenterregten Synchronmaschine (1) nach Anspruch 5 oder 6, **dadurch gekennzeichnet, dass** radiale bzw. quasi-radiale Erstreckung der Stege (15) maximal bis zur Hälfte der magnetischen Dicke des in der Tasche (13) benachbarten Permanentmagneten (11) reicht, insbesondere eine radiale bzw. quasi-radiale Erstreckung von zumindest 1mm aufweist.

8. Rotor (10) einer rotatorischen permanenterregten Synchronmaschine (1) nach einem der vorhergehenden Ansprüche, **dadurch gekennzeichnet, dass** pro Pol und/oder Ausnehmung (12) zumindest ein Permanentmagnet (11) vorgesehen ist.

9. Rotor (10) einer rotatorischen permanenterregten Synchronmaschine (1) nach einem der vorhergehenden Ansprüche, **dadurch gekennzeichnet, dass** die Ausnehmungen (12) eines Pols des Rotors (10) insbesondere tangential oder in V-Form oder in Doppel-V-Form oder in U-Form angeordnet sind.

10. Permanenterregte Synchronmaschine (1) mit einem Stator (2) und einem davon durch einen Luftspalt (7) beabstandeten Rotor (10) mit vergrabenen Permanentmagneten (11), die in im Wesentlichen axial verlaufenden Ausnehmungen (12) eines magnetisch leitfähigen Körpers, insbesondere eines axial geschichteten Blechpakets des Rotors (10) angeordnet sind, wobei jede Ausnehmung (12) eine Tasche (13) zur Aufnahme eines oder mehrerer Permanentmagneten (11)aufweist, wobei sich an den entgegengesetzten Enden der Taschen (13), in einer Längsachse (20) der Ausnehmung (12) Flusssperren (14) befinden, wobei an der einem Außendurchmesser des Rotors (10) zugewandten Seite der Ausnehmungen (12) im Bereich zwischen Tasche (13) und Flusssperre (14) Mittel zur Erhöhung einer Gegenfeldstabilität vorgesehen sind, um insbesondere einem Stoßkurzschluss der permanenterregten Synchronmaschine einer zumindest abschnittsweisen irreversiblen Entmagnetisierung der Permanentmagnete (11) in den Taschen (13) entgegenzuwirken.

11. Förderanlage, Kompressor, Verdichter oder Traktionsantrieb mit zumindest einer permanenterregten Synchronmaschine (1) nach Anspruch 10.
